# EUROPEAN PATENT SPECIFICATION

(11) **EP 3 146 282 B1**
(45) Date of publication and mention of the grant of the patent: **11.04.2018**
(21) Application number: 15707333.9
(22) Date of filing: 26.02.2015
(51) Int. Cl.: F25D 23/06

(54) **A COOLING DEVICE WITH IMPROVED INSULATION EFFICIENCY**
KÜHLVORRICHTUNG MIT VERBESSERTER ISOLIERUNGSEFFIZIENZ
DISPOSITIF DE REFROIDISSEMENT PRÉSENTANT UNE MEILLEURE EFFICACITÉ D'ISOLATION

(30) Priority: 21.05.2014 TR 201405697
(43) Date of publication of application: 29.03.2017
(73) Proprietor: Arçelik Anonim Sirketi, 34950 Istanbul (TR)
(72) Inventor: SAYER, Goksin, 34950 Istanbul (TR); KAYA, Metin, 34950 Istanbul (TR); GULTEKIN, Ozgun Atac, 34950 Istanbul (TR); UYSAL, Oktay, 34950 Istanbul (TR); SUVACI, Ender, 34950 Istanbul (TR); ERDEM, Murat, 34950 Istanbul (TR); SAHIN, Yucel, 34950 Istanbul (TR)
(86) International application number: PCT/EP2015/054018
(87) International publication number: WO 2015/176832

(56) References cited:
- JP-A- 2001 349 664
- JP-A- 2003 139 291
- JP-A- 2003 232 492

## Description

The present invention relates to a cooling device, the insulation efficiency of which is improved.

In cooling devices, especially in refrigerators and freezers, an insulation material that is generally closed-cell rigid polyurethane is filled between the inner and outer walls of the body in order to provide heat insulation between the inner volume and the outer environment. The cell size of the polyurethane is one of the fundamental parameters that affect the thermal conductivity of the insulation material. Since the insulation efficiency of the insulation material decreases as the cell size increase, the energy consumption also increases and the efficiency of the cooling device decreases.

In the state of the art Japanese Patent Application No. JPH09303947, a cooling device is disclosed, the insulation efficiency of which is increased by enabling the insulation material to be homogeneously distributed by means of the plates placed to the inner side of the inner wall of the body, contacting the insulation material.

Japanese Patent Application JP2003232492 discloses an insulation panel in which a small quantity of a binder is kneaded into a waste urethane pulverized material and enclosed together with a getter agent in a gas barrier film. JP 2003 139291 A and JP 2001 349664 A also contain relevant prior art information. The aim of the present invention is the realization of a cooling device whereof the insulation efficiency is increased by means of the insulation material with reduced cell size.

The cooling device realized in order to attain the aim of the present invention, explicated in the first claim and the respective claims thereof, comprises a body having an insulation volume that is situated between the inner wall and the outer wall thereof and wherein an insulation material is filled.

The insulation material of the present invention comprises rigid polyurethane additive that is pulverized so that the cell size thereof is decreased. The cell size distribution and the cell size are among the important criteria that affect the conductivity of the insulation material. By means of the pulverized waste polyurethane additive, the average cell size of the insulation material is decreased, thus reducing the thermal conductivity thereof and increasing the efficiency of the cooling device. Thanks to the recycling of the used polyurethane, environmentally-friendly products are produced and the production costs are decreased.

In the present invention, the insulation material is polyurethane. The average cell size of the polyurethane insulation material can be decreased by the producer by means of the waste polyurethane additive that is reduced to the desired size. Thus, the thermal insulation value of the insulation material can be increased.

In the present invention, the insulation material is produced by mixing the pulverized rigid polyurethane with the polyol and pentane that are components of the rigid polyurethane. By adding isocyanate into the mixture formed after mixing the pulverized waste polyurethane with the polyol and pentane, the curing reaction starts. The cell size of the polyurethane produced by means of this method is decreased, thus an insulation material with reduced thermal conductivity is obtained.

In the present invention, the insulation material comprises pulverized rigid polyurethane in a ratio between 0.5% and 25% by weight that serves as a heterogeneous nucleation agent. The hydrophobic rigid polyurethane that is pulverized by decreasing its particle size is added into the chemicals that form the polyurethane as a heterogeneous nucleation agent and adapts to the final product by homogeneously dispersing in the insulation material thanks to its hydrophobic structure.

In an embodiment of the present invention, the insulation material comprises pulverized rigid polyurethane having a particle size between 0.2 and 100 microns.

The cooling device realized in order to attain the aim of the present invention is illustrated in the attached figures, where:

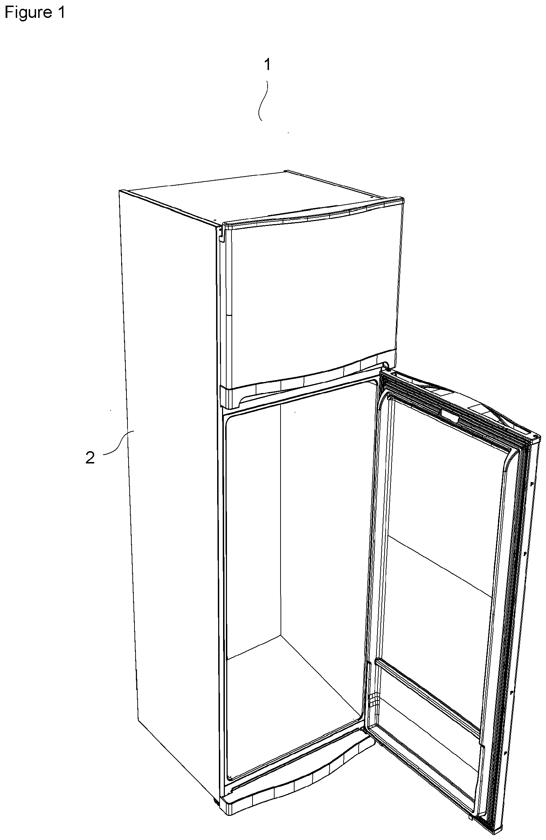

Figure 1 - is the perspective view of a cooling device.

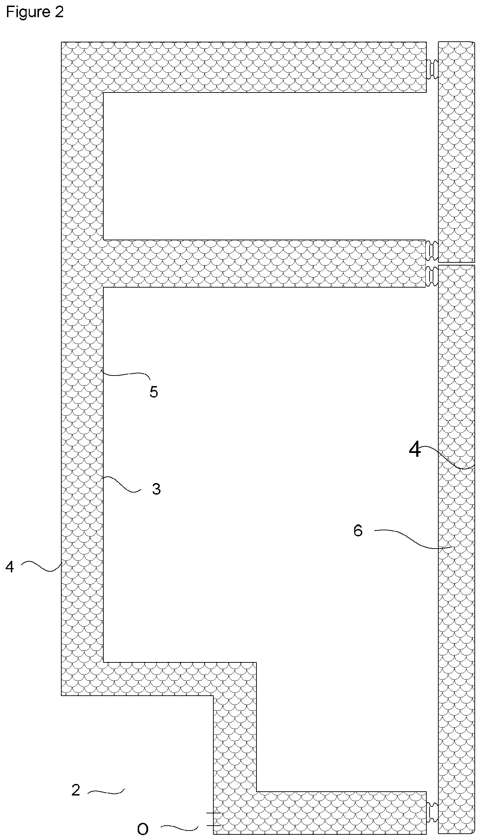

Figure 2 - is the schematic view of the body.

The elements illustrated in the figures are numbered as follows:
1. Cooling device
2. Body
3. Inner wall
4. Outer wall
5. Insulation volume
6.
   6. Insulation material
   0. Opening

The cooling device (1) comprises a body (2) that has an inner wall (3), an outer wall (4), an insulation volume (5) between the inner wall (3) and the outer wall (4) and an insulation material (6) filled into the insulation volume (5). While the inner wall (3) and the outer wall (4) are being joined during the production of the body (2), an opening (O) is left so that the insulation material (6) can be filled into the insulation volume (5). The insulation material (6) filled preferably through a single opening (O) reaches almost every section of the insulation volume (5) thanks to its fluid structure. When filled into the insulation volume (5), the insulation material (6) composed of more than one chemical substance enters into exothermic reaction, expands and solidifies. Thus, the interior volume of the cooling device (1) is enabled to be insulated from the outer environment conditions and the durability of the body (2) is increased.

The insulation material (6) of the present invention comprises rigid polyurethane additive that is pulverized so as to decrease its particle size. The waste polyurethane whereof the particle size is decreased to a size ranging between 0.2 and 100 microns by pulverization affects the polyurethane cell formation occurring as a result of the chemical reaction during the process and causes the cells to get smaller. Thus, by preserving the free flow of the heat-laden air molecules, the heat transfer realized by convection between the outer environment and the foods in the cooling device (1) is reduced. Consequently, the efficiency of the cooling device (1) is improved while providing energy savings.

In the present invention, the insulation material (6) is polyurethane. The particle size of the waste polyurethane that affects the thermal conductivity of the insulation material (6) and the amount thereof included in the insulation material (6) are determined by the producer. By means of the waste polyurethane whereof the particle size is reduced by pulverization, the insulation efficiency of the insulation material (6) is increased.

In the present invention, the insulation material (6) is produced by mixing the closed-cell rigid polyurethane, the particle size of which is reduced, with the polyol and pentane that are components of the rigid polyurethane. By adding isocyanate into the mixture formed after mixing the pulverized waste polyurethane with the polyol and pentane, the curing reaction starts. By means of the polyurethane that is produced by this method, an insulation material (6) with decreased cell size and reduced thermal conductivity is obtained.

In the present invention, the insulation material (6) comprises pulverized rigid polyurethane in a ratio between 0.5% and 25% by weight that serves as a heterogeneous nucleation agent. The rigid polyurethane whereof the cell size is reduced by pulverization provides heterogeneous nucleation in the components that form the insulation material (6). Thanks to the hydrophobic features of the rigid polyurethane additive, the polyurethane homogeneously disperses in the matrix and achieves a stable state.

In an embodiment of the present invention, the insulation material (6) comprises pulverized rigid polyurethane having a particle size between 0.2 and 100 microns. Thus, the insulation efficiency of the insulation material (6) is increased while the average cell size thereof decreases.

By means of the present invention, the thermal conductivity of the insulation material (6) is reduced, enabling the cooling device (1) to operate more efficiently thanks to the closed-cell preferably waste rigid polyurethane having decreased particle size. Moreover, the amount of waste polyurethane, that is produced while destroying the used cooling devices (1) and that is destroyed by being burned or buried into the ground, is decreased. By means of the recycling of the waste polyurethane used in the production of the insulation material (6), the energy and material consumption is reduced and environmentally-friendly products are produced.

## Claims

1. A cooling device (1) comprising a body (2) that has an inner wall (3), an outer wall (4), an insulation volume (5) between the inner wall (3) and the outer wall (4) and an insulation material (6) filled into the insulation volume (5), wherein
- the insulation material (6) comprises rigid polyurethane that is pulverized so as to reduce the cell size thereof, **characterized in that**
- the insulation material (6) is polyurethane and is produced by mixing closed-cell rigid polyurethane, the particle size of which is reduced, with polyol and pentane that are components of the rigid polyurethane,
- the insulation material (6) comprises the pulverized rigid polyurethane in a ratio between 0.5% and 25% by weight that serves as a heterogeneous nucleation agent.

2. A cooling device (1) as in claim 1, **characterized by** the insulation material (6) comprising pulverized rigid polyurethane having a particle size between 0.2 and 100 microns.

## Patentansprüche

1. Ein Kühlgerät (1) bestehend aus einem Körper (2), der eine Innenwand (3) hat, eine Außenwand (4), ein Isolierungsvolumen (5) zwischen der Innenwand (3) und Außenwand (4) und ein Isolierungsmaterial (6), das gefüllt ist in das Isolierungsvolumen (5), wo
- das Isolierungsvolumen (6) beinhaltet starres Polyurethan, das so pulverisiert ist, um Zellendimension davon zu reduzieren, **gekennzeichnet dadurch, daß**
- das Isolierungsmaterial (6) Polyurethan ist und produziert wird durch Einmischung vom zellengesperrten starren Polyurethan, dessen Partikelgröße vermindert wird mit Polyol und Pentan, die die Komponente von starrem Polyurethan sind,
- das Isolierungsmaterial (6) beinhaltet pulverisiertes starres Polyurethan in einem Verhältnis von zwischen 0.5% und 25% nach Gewicht, das als ein heterogenes Kernbildungsmittel bedient.

2. Ein Kühlgerät (1) nach Anspruch 1, **dadurch gekennzeichnet, daß** das Isolierungsmaterial (6) beinhaltet pulverisiertes starres Polyurethan mit einer Partikelgröße zwischen 0.2 und 100 Mikron.

## Revendications

1. Dispositif de refroidissement (1) comprenant un corps (2) ayant une paroi interne (3), une paroi extérieure (4), un volume d'isolation (5) entre la paroi interne (3) et la paroi extérieure (4) et un matériau d'isolation (6) rempli dans le volume d'isolation (5), dans lequel
- le matériau d'isolation (6) comprend du polyuréthane rigide qui est pulvérisé de manière à réduire la taille de ses cellules,
**caractérisé en ce que**
- le matériau d'isolation (6) est du polyuréthane et est produit en mélangeant du polyuréthane rigide à cellules fermées, dont la taille des particules est réduite, avec du polyol et du pentane qui sont des composants du polyuréthane rigide,
- le matériau isolant (6) comprend le polyuréthane rigide pulvérisé dans un rapport compris entre 0,5% et 25% en poids qui sert d'agent de nucléation hétérogène.

2. Dispositif de refroidissement (1) selon la revendication 1, **caractérisé en ce que** le matériau d'isolation (6) comprend du polyuréthane rigide pulvérisé ayant une taille de particules comprise entre 0,2 et 100 microns.
